# EUROPEAN PATENT APPLICATION

(11) **EP 3 505 645 A1**
(43) Date of publication of application: **03.07.2019**
(21) Application number: 17843538.4
(22) Date of filing: 21.08.2017
(51) Int. Cl.: C22B 59/00, B01D 11/04, C22B 3/38, C22B 3/40

(54) **METHOD FOR PURIFYING SCANDIUM AND SCANDIUM EXTRACTANT**

(30) Priority: 24.08.2016 JP 2016163604
(71) Applicant: Kyushu University, National University Corporation, Nishi-ku Fukuoka-shi Fukuoka 8190395 (JP); Sumitomo Metal Mining Co., Ltd., Tokyo 105-8716 (JP)
(72) Inventor: GOTO Masahiro, Fukuoka-shi Fukuoka 8190395 (JP); KUBOTA Fukiko, Fukuoka-shi Fukuoka 8190395 (JP); MATSUOKA Itsumi, Niihama-shi Ehime 792-0002 (JP); ASANO Satoshi, Niihama-shi Ehime 792-0002 (JP); KOBAYASHI Hiroshi, Niihama-shi Ehime 792-0002 (JP)
(74) Representative: Wallin, Nicholas James
(86) International application number: PCT/JP2017/029807
(87) International publication number: WO 2018/038058

(57) **Abstract**

Provided is a method for efficiently purifying scandium by separating scandium and impurities from an acidic solution which contains scandium and impurities that include iron. A method for purifying scandium according to the present invention subjects an acidic solution, which contains an element component including at least ion, while containing scandium, to solvent extraction by means of a mixed extractant containing a phosphoric acid-based extractant and a neutral extractant, thereby extracting scandium from the acidic solution. It is preferable that the phosphoric acid-based extractant is contained in the mixed extractant at a mixing molar ratio within the range of from 5% to 50% (inclusive). It is also preferable that the pH of the acidic solution is adjusted to a value within the range of from 0.0 to 2.0 (inclusive) before the solvent extraction.

## Description

### TECHNICAL FIELD

The present invention relates to a method for recovering scandium. For example, the present invention relates to a method for purifying scandium by separating impurities including iron from an acidic solution which is generated in a hydrometallurgy process of nickel oxide ore and contains scandium and the like.

### BACKGROUND ART

Rare earth elements are expensive, the production quantity thereof is also limited, further rare earth elements are an element which is hardly separated and purified, and thus the range of use thereof is limited.

As an example of rare earth elements, there is scandium. For example, it is known that a trace amount of scandium is contained in nickel oxide ore such as laterite ore, and scandium contained in the nickel oxide ore can be recovered from the leachate to be obtained by adding sulfuric acid to the nickel oxide ore and subjecting the nickel oxide ore to pressure leaching.

For example, Patent Document 1 discloses that nickel and scandium can be recovered from an oxide ore by performing (A) a leaching step of leaching an oxide ore with an acid under high temperature and high pressure to obtain a leachate containing nickel and scandium, (B) a first neutralization step of removing iron and aluminum in the leachate as a precipitate by adjusting the pH of the leachate to the range of 2 to 4 by addition of a neutralizing agent to the leachate, (C) a second neutralization step of recovering scandium in the solution obtained by removing the precipitate in the first neutralization step as a precipitate by adjusting the pH of the solution to the range of more than 4 to 7.5 by addition of a neutralizing agent to the solution, and (D) a third neutralization step of recovering nickel in the solution as a precipitate by adjusting the pH of the solution to more than 7.5 by addition of a neutralizing agent to the solution.

However, various problems arise when it is attempted to perform the industrial operation by the method described in Patent Document 1. For example, there is a possibility that scandium is also precipitated together with iron and aluminum in the first neutralization step and this leads to a decrease in the extraction rate of scandium since the range of pH adjusted in the first neutralization step is close to the range of pH adjusted in the second neutralization step. In addition, there is a possibility that iron and aluminum are also precipitated together with scandium in the second neutralization step and this leads to a decrease in the purity of scandium. Hence, both situations are undesirable. In addition, a large amount of precipitate is generated by the addition of neutralizing agent, but generally, the properties of a precipitate to be obtained by adding an alkali to an acid are unstable, the precipitate exhibits poor filterability, and there is a possibility that the cost of scaling up of the facility and the like also increase.

For this reason, it is preferable to decrease the number of neutralization steps as much as possible, and a method for selectively separating only scandium from a solution containing scandium by means of solvent extraction and the like has been proposed.

Specifically, as a method for selectively separating only scandium by means of solvent extraction and the like, for example, there is a method described in Patent Document 2. This method is a method in which an organic solvent is first added to a scandium-containing solution of an aqueous phase containing at least one or more kinds of iron, aluminum, calcium, yttrium, manganese, chromium, or magnesium in addition to scandium and the scandium component is extracted into the organic solvent. Subsequently, scrubbing is performed by adding an aqueous solution of hydrochloric acid to the organic solvent in order to separate minor components which have been extracted into the organic solvent together with scandium to remove the minor components, an aqueous solution of sodium hydroxide is then added to the organic solvent, and the scandium remaining in the organic solvent is formed into a slurry containing Sc(OH)₃. Thereafter, an aqueous solution of scandium chloride is obtained by dissolving Sc(OH)3 obtained by filtering this slurry in hydrochloric acid, a precipitate of scandium oxalate is formed by adding oxalic acid to this, the trace impurities are separated into the filtrate by filtering the precipitate, and then the residue is calcined to obtain high purity scandium oxide.

However, not only scandium but also impurity components are extracted into the organic solvent to an extent to which the amount of impurity components cannot be ignored in the case of using such a method described in Patent Document 2. Particularly, a large amount of impurity components such as calcium, magnesium, and aluminum is present in the leachate obtained through acid leaching of nickel oxide ore and neutralization. For this reason, there is also a problem that it is required to treat the waste liquid generated by scrubbing as well as there is a problem that labor and cost of scrubbing for separating the impurity components which have been extracted into the organic solvent are required.

Furthermore, scandium is greatly affected by pH and thus a practical extraction rate cannot be obtained unless the pH is maintained at a certain value or higher when scandium is extracted. Moreover, it is difficult to selectively separate only scandium in the pH region suitable for the extraction of scandium since not only the extraction rate of scandium but also the extraction rate of impurity components as described above increase.

In this way, it is difficult to selectively and effectively extract only scandium from a system containing impurity components as described above in addition to scandium.

Meanwhile, there is a case in which the extraction behavior in the case of using two or more kinds of extractants in mixture is different from that in the case of using one kind of extractant singly. This is called a cooperative effect (also called "synergetic effect").

For example, Patent Document 3 proposes a method for recovering nickel from an electroless nickel waste liquid using two or more kinds of extractants in mixture at a higher yield as compared with the case of using one kind of extractant singly by utilizing the cooperative effect. According to Patent Document 3, it is said that nickel can be recovered at 98% to 99% by one time of batch extraction without performing pH adjustment in the case of using two or more kinds of extractants in mixture although nickel cannot be almost extracted in the case of using one kind of extractant singly.

In addition, Patent Document 4 proposes a method for extracting cobalt and manganese from a mixed solution of cobalt, manganese, calcium, and magnesium by mixing a carboxylic acid-based extractant with an oxime-based extractant.

However, in both of Patent Document 3 and Patent Document 4, the extraction behavior of scandium has not been reported and a solvent capable of selectively extracting and separating only scandium from a solution (leachate) obtained through acid leaching of nickel oxide ore has not been found.

Furthermore, by the conventional solvent extraction method as described above, it is impossible to practically sufficiently extract scandium unless the pH is maintained in a relatively high region of about 4 to 5 when scandium is extracted from a mixed solution containing scandium, manganese, calcium, aluminum, and magnesium. For this reason, it is difficult to selectively extract scandium directly from a solution having a high acid concentration, namely, a low pH such as a solution immediately after the leaching treatment.

In addition, in the case of attempting to selectively extract scandium from a solution containing iron ions as an impurity such as a solution obtained through acid leaching of nickel oxide ore, not only the amount of neutralizing agent increases but also the generation of hydroxides of iron is promoted, scandium and other valuable elements are coprecipitated, and loss is caused when the pH of the solution is increased to about 4 to 5 in order to extract scandium. In addition, even when it is attempted to separate scandium by subjecting such a solution containing iron ions to ion exchange and solvent extraction, inclusions called clad are likely to be generated during the extraction treatment, this causes a problem that it is difficult to perform the operation and this thus makes it difficult to apply the extraction treatment to actual operation.
Patent Document 1: Japanese Unexamined Patent Application, Publication No. 2000-234130
Patent Document 2: Japanese Unexamined Patent Application, Publication No. H09-291320
Patent Document 3: Japanese Unexamined Patent Application, Publication No. 2011-52250
Patent Document 4: U.S. Published Patent Application Publication, No. 2008/0038168

### DISCLOSURE OF THE INVENTION

### Problems to be Solved by the Invention

The present invention is made in view of the above actual circumstances. An object of the present invention is to provide a method for efficiently purifying scandium by separating scandium and impurities in an acidic solution containing impurities including iron as well as scandium from each other.

### Means for Solving the Problems

The present inventors have performed extensive studies to solve the aforementioned problems. As a result, the present inventors have found out that scandium can be selectively extracted by performing solvent extraction using a mixed extractant containing a phosphoric acid-based extractant and a neutral extractant. Then the present invention has been completed.
(1) A first embodiment of the present invention provides a method for purifying scandium, including: subjecting an acidic solution containing an element component including at least iron as well as scandium to solvent extraction using a mixed extractant containing a phosphoric acid-based extractant and a neutral extractant to extract scandium from the acidic solution.
(2) A second embodiment of the present invention provides the method for purifying scandium according to the first embodiment, in which the phosphoric acid-based extractant is 2-ethylhexylphosphonic acid 1-ethylhexyl.
(3) A third embodiment of the present invention provides the method for purifying scandium according to the first or second embodiment, in which the neutral extractant is tri-n-octylphosphine oxide.
(4) A fourth embodiment of the present invention provides the method for purifying scandium according to any one of the first to third embodiments, in which the phosphoric acid-based extractant is contained in the mixed extractant at a mixing proportion in a range of between 5% or more and 50% or less in terms of molar ratio.
(5) A fifth embodiment of the present invention provides the method for purifying scandium according to any one of the first to fourth embodiments, in which a pH of the acidic solution is adjusted to a range of between 0.0 or more and 2.0 or less and the acidic solution after pH adjustment is subjected to the solvent extraction.
(6) A sixth embodiment of the present invention provides the method for purifying scandium according to any one of the first to fourth embodiments, in which the acidic solution is a solution obtained by adding an acid to nickel oxide ore and leaching scandium or a solution obtained by dissolving scandium oxide or scandium hydroxide in an acid, a pH of the acidic solution is adjusted to a range of between 0.0 or more and 2.0 or less, and the acidic solution after pH adjustment is subjected to the solvent extraction.
(7) A seventh embodiment of the present invention provides the method for purifying scandium according to any one of the first to sixth embodiments, in which the acidic solution further contains any one or more kinds of zirconium or thorium.
(8) An eighth embodiment of the present invention provides a scandium extractant for extracting scandium from an acidic solution containing an element component including at least iron as well as scandium, containing: a phosphoric acid-based extractant and a neutral extractant.
(9) A ninth embodiment of the present invention provides the scandium extractant according to the eighth embodiment, in which the phosphoric acid-based extractant is contained at a proportion in a range of between 5% or more and 50% or less in terms of molar ratio.

### Effects of the Invention

According to the present invention, it is possible to efficiently purify scandium from an acidic solution containing impurities including iron as well as scandium.

### BRIEF DESCRIPTION OF THE DRAWINGS

Fig. 1 is a diagram for illustrating the relation between the pH and the extraction rate when a mixed extractant (PC88A + TOPO) is used in Example 1.

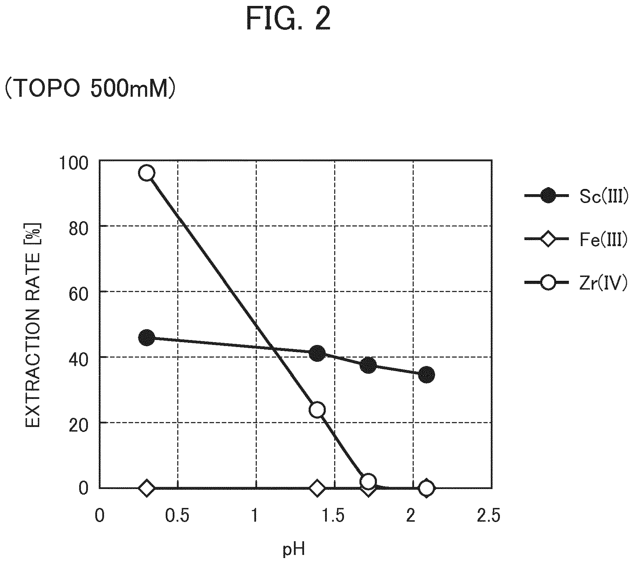

Fig. 2 is a diagram for illustrating the relation between the pH and the extraction rate when an extractant composed only of a neutral extractant (TOPO) is used in Comparative Example 1.
Fig. 3 is a diagram for illustrating the relation between the pH and the extraction rate when an extractant composed only of a phosphoric acid-based extractant (PC88A) is used in Comparative Example 2.
Fig. 4 is a diagram for illustrating the relation between the pH and the separation factor when a scandium extractant according to a mixed extractant is used in Example 1.
Fig. 5 is a diagram for illustrating the relation between the pH and the separation factor when an extractant composed only of a neutral extractant (TOPO) is used in Comparative Example 1.
Fig. 6 is a diagram for illustrating the relation between the pH and the extraction rates of various kinds of elements contained in nickel oxide ore when a mixed extractant (PC88A + TOPO) is used in Example 2.
Fig. 7 is a diagram for illustrating the relation between the pH and the extraction rates of various kinds of elements contained in nickel oxide ore when a mixed extractant (PC88A + TOPO) is used in Example 3.
Fig. 8 is a diagram for illustrating the relation between the pH and the extraction rate when a mixed extractant (PC88A + TOPO) is used in Reference Example 1.
Fig. 9 is a diagram for illustrating the relation between the pH and the separation factor when a mixed extractant (PC88A + TOPO) is used in Reference Example 1.
Fig. 10 is a diagram for illustrating the relation between the pH and the extraction rate when a mixed extractant (Cyanex272 + TOPO) is used in Example 4.
Fig. 11 is a diagram for illustrating the relation between the pH and the separation factor when a mixed extractant (Cyanex272 + TOPO) is used in Example 4.

### PREFERRED MODE FOR CARRYING OUT THE INVENTION

Below, specific embodiments of the present invention (hereinafter referred to as the "present embodiments") will be described in more detail with reference to the drawings. Note that the present invention shall not be limited to the following embodiments and can be implemented with appropriate modifications made without departing from the spirit of the present invention. In addition, in the present specification, the notation "X to Y" (X and Y are arbitrary numerical values) means "X or more and Y or less".

### «1. Scandium extractant»

The method for purifying scandium according to the present embodiment is a method in which scandium is extracted from an acidic solution containing scandium (Sc) through solvent extraction and purified (recovered). Particularly, in this method for purifying scandium, scandium in an acidic solution containing impurity elements including at least iron (Fe) as well as scandium is separated from these impurities and thus extracted.

Specifically, in this method for purifying scandium, scandium is extracted from an acidic solution containing an impurity element including at least iron as well as scandium by subjecting the acidic solution to solvent extraction using a mixed extractant containing a phosphoric acid-based extractant and a neutral extractant.

According to this method, it is possible to efficiently separate impurities including at least iron, scandium, and impurity elements from one another and to selectively extract only scandium. In addition, it is possible to extract scandium with excellent selectivity even from an acidic solution having a pH in a low region among acidic solutions by use of a mixed extractant containing a phosphoric acid-based extractant and a neutral extractant. Furthermore, it is possible to efficiently separate scandium from impurities and to selectively extract scandium, thus to effectively decrease the amount of the neutralizing agent to be used in the neutralization treatment of the acidic solution, and to prevent the generation of inclusions called clad during the extraction treatment.

### [Acidic solution containing scandium]

An acidic solution containing scandium (hereinafter simply referred to as the "acidic solution") is a solution to be a target for a solvent extraction treatment and is one that contains an impurity element including at least iron as well as scandium.

Specific examples of this acidic solution may include a solution into which a valuable metal including scandium is leached by adding an acid such as sulfuric acid to nickel oxide ore in a hydrometallurgy process of nickel oxide ore. In addition, examples of the acidic solution may include a solution to be obtained by dissolving scandium oxide or scandium hydroxide in an acid such as sulfuric acid.

Examples of the acidic solution to be obtained through acid leaching of nickel oxide ore may include a leachate obtained through acid leaching of nickel oxide ore or a post-sulfuration liquid obtained by adding a sulfurizing agent to the leachate and separating and removing nickel, cobalt, and the like by a sulfuration reaction. Specifically, the post-sulfuration liquid is a solution obtained by adding an acid such as sulfuric acid to nickel oxide ore, subjecting the nickel oxide ore to a leaching treatment, subjecting the leachate obtained to a neutralization treatment using a neutralizing agent, then adding a sulfurizing agent such as hydrogen sulfide gas to the neutralized liquid to cause a sulfuration reaction, and separating and removing sulfides of nickel and cobalt.

Incidentally, the acidic solution to be obtained through such acid leaching of nickel oxide ore contains any one or more kinds of elements of zirconium (Zr) or thorium (Th) in addition to iron.

### [Mixed extractant]

The mixed extractant is one that contains a phosphoric acid-based extractant and a neutral extractant. In the method for purifying scandium according to the present embodiment, the acidic solution described above is subjected to a solvent extraction treatment using such a mixed extractant.

In the mixed extractant, the phosphoric acid-based extractant is not particularly limited, but examples thereof may include 2-ethylhexylphosphonic acid 1-ethylhexyl. Incidentally, this phosphoric acid-based extractant is commercially available under a trade name of PC88A manufactured by DAIHACHI CHEMICAL INDUSTRY CO., LTD.

In addition, the neutral extractant is not particularly limited, but examples thereof may include tri-n-octylphosphine oxide. Incidentally, this neutral extractant is commercially available under a trade name of TOPO manufactured by DOJINDO LABORATORIES.

With regard to the mixing proportion of the phosphoric acid-based extractant to the neutral extractant, the proportion of the phosphoric acid-based extractant in the mixed extractant is preferably in the range of between 5% or more and 50% or less in terms of molar ratio, and the proportion is more preferably in the range of between 15% or more and 30% or less in terms of molar ratio when ease of industrial handling is also taken into consideration. As the mixing proportion of the phosphoric acid-based extractant is in the range of between 5% or more and 50% or less in terms of molar ratio, it is possible to more efficiently perform the separation of scandium from an impurity element including iron and to enhance scandium selectivity in the solvent extraction.

Incidentally, the mixed extractant may contain an extractant other than the phosphoric acid-based extractant and neutral extractant described above in a range in which the effect by the mixed extractant is not impaired.

Here, usually an extractant to be used in solvent extraction has a high viscosity and an adverse effect from the viewpoint of operation such as poor phase separation property with the aqueous phase is caused when the extractant is used in the extraction treatment as it is. For this reason, it is common to dilute the extractant with a diluent in order to decrease the viscosity of the extractant.

Specifically, the diluent is not particularly limited as long as it can dissolve the mixed extractant to be used and a complex of scandium which is a rare earth element. Examples thereof may include chlorine-based solvents such as chloroform and dichloromethane, aromatic hydrocarbons such as benzene, toluene, and xylene, and aliphatic hydrocarbons such as hexane. One kind of such a diluent may be used singly, or two or more kinds thereof may be used in mixture. In addition, alcohols such as 1-octanol may be used in mixture.

### [Solvent extraction using mixed extractant]

In the method for purifying scandium according to the present embodiment, an acidic solution containing an impurity element including iron and scandium is subjected to solvent extraction using a mixed extractant containing a phosphorus-based extractant and a neutral extractant and scandium is thus extracted as described above.

In the solvent extraction treatment, the acidic solution of a target for treatment and the mixed extractant are mixed together and stirred. Thereafter, scandium ions are selectively extracted into the organic phase by separating the mixed solution of the acidic solution and the mixed extractant into an aqueous phase and an organic phase by using a separatory funnel. At this time, it is possible to improve the scandium selectivity and to more efficiently extract scandium by use of the mixed extractant in which the mixing proportion of the phosphoric acid-based extractant is set to be in the range of between 5% or more and 50% or less as described above.

The stirring operation in the solvent extraction treatment may be performed at the sufficient number of revolutions to an extent to which the organic phase and the aqueous phase do not separate from each other when the mixed extractant and the acidic solution are mixed together. In addition, the stirring time is not particularly limited, but it is preferable to set the stirring time to 20 minutes or more from the viewpoint of being able to extract scandium from the acidic solution at a higher yield. Incidentally, in this solvent extraction operation, the pH of the acidic solution to be mixed with the mixed extractant tends to decrease and it is thus preferable to suppress a decrease in pH by adding an aqueous alkali solution such as an aqueous solution of sodium hydroxide as appropriate.

In addition, when performing solvent extraction, it is preferable to adjust the pH of the acidic solution to be a target for treatment to a range of between 0.0 or more and 2.0 or less, it is more preferable to adjust the pH to a range of between 1.3 or more and 2.0 or less, and it is particularly preferable to adjust the pH to a range of between 1.7 or more and 2.0 or less prior to the extraction treatment.

Here, when the pH of an acidic solution containing iron ions in a large amount (for example, a solution obtained through acid leaching of nickel oxide ore) exceeds 2.5 to 3.0, generally the generation of hydroxides of iron is likely to be promoted, rare earth elements such as scandium are coprecipitated, and also inclusions called clad are generated during the extraction treatment, and this makes it difficult to perform the operation. Particularly, for example, when the pH of an acidic solution containing iron becomes 2.5 or more, hydroxides of iron are generated and the phase separation remarkably poorly proceeds. For this reason, in the case of an acidic solution containing an impurity element including at least iron as well as scandium as described above, it is preferable to adjust the pH thereof to a range of between 0.0 or more and 2.0 or less and to subject the acidic solution after pH adjustment to solvent extraction.

Moreover, even in the case of a solution having a pH in such a low acidic region, it is possible to extract scandium at a sufficiently high extraction rate and to perform a stable operation by subjecting the solution to solvent extraction using a mixed extractant of a phosphoric acid-based extractant and a neutral extractant. It is possible to extract only scandium from an acidic solution containing an impurity element including iron at a high purity and a high yield by adjusting the pH of the acidic solution to a predetermined range and then subjecting the acidic solution after pH adjustment to the solvent extraction treatment in this way.

### EXAMPLES

Below, the present invention will be described in more detail with reference to Examples, but the present invention shall not in any sense be limited to these descriptions. «1. Preparation of mixed extractant for scandium extraction»

Solvent extractants for scandium extraction used in the following Examples and Comparative Examples were prepared as presented in the following Table 1. Incidentally, 2-ethylhexylphosphonic acid 1-ethylhexyl (trade name: PC88A) was used as a phosphoric acid-based extractant and tri-n-octylphosphine oxide (trade name: TOPO) was used as a neutral extractant.

**[Table 1]**

| Extractant | Molar ratio of solvent | Concentration of PC88A [mol/L] | Concentration of TOPO [mol/L] |
|---|---|---|---|
| Example 1 | PC88A:TOPO =17:83 | 0.1 | 0.5 |
| Comparative Example 1 | PC88A:TOPO =0:100 | 0 | 0.5 |
| Comparative Example 2 | PC88A:TOPO =100:0 | 0.6 | 0 |

Specifically, the mixed extractant used in Example 1 was obtained by dissolving the respective extractants in SWASOL (manufactured by MARUZEN PETROCHEMICAL CO., LTD.) so that the molar concentration of the phosphoric acid-based extractant (PC88A) was 0.1 mol/L and the molar concentration of the neutral extractant (TOPO) was 0.5 mol/L.

In addition, the extractant used in Comparative Example 1 was obtained by dissolving the neutral extractant (TOPO) in SWASOL so that the molar concentration of the neutral extractant was 0.5 mol/L. In addition, the extractant used in Comparative Example 2 was obtained by dissolving the phosphoric acid-based extractant (PC88A) in SWASOL so that the molar concentration of the phosphoric acid-based extractant was 0.6 mol/L. Incidentally, the extractants used in Comparative Examples 1 and 2 are a single extractant composed of a phosphoric acid-based extractant or a neutral extractant. «2. Extraction effect by each extractant and investigation on pH condition of acidic solution»

In Example 1 and Comparative Examples 1 and 2, sulfuric acid solutions (acidic solutions) respectively containing scandium (Sc), iron (Fe), and zirconium (Zr) or thorium (Th) in the concentrations presented in the following Table 2 were prepared.

**[Table 2]**

| Sulfuric acid solution | Concentration of metal (Unit: mg/L) | | | |
|---|---|---|---|---|
| | SC³⁺ | Fe³⁺ | Zr⁴⁺ | Th⁴⁺ |
| Example 1 | 13,000 | 2,600 | 100 | - |
| Comparative Example 1 | 13,000 | 2,600 | 100 | - |
| Comparative Example 2 | 20,000 | 4,000 | - | 140 |

### [Example 1]

In Example 1, the sulfuric acid solution was divided into five portions by 2.5 ml for each, and the pH of the sulfuric acid solution was adjusted to a constant value in the range of 0.0 to 2.0. Thereafter, the respective sulfuric acid solutions were mixed with 2.5 ml of mixed extractant for scandium extraction (PC88A + TOPO), and the mixed solution was stirred at the number of revolutions of 650 rpm for 20 minutes. At this time, a 1 mol/L aqueous solution of sodium hydroxide was appropriately added to the mixed solution in order to maintain the pH of the sulfuric acid solution at the same value as that before mixing with the mixed extractant.

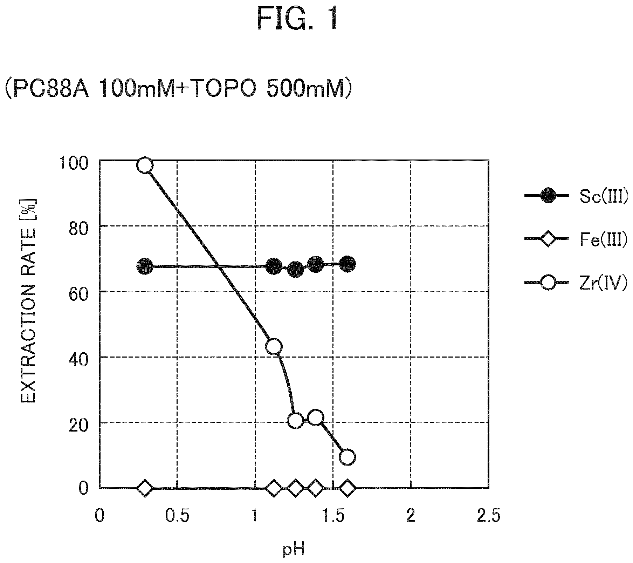

After stirring for a predetermined time, the aqueous phase and organic phase of the mixed solution were separated from each other by using a separatory funnel, the extraction residual liquid (aqueous phase) was subjected to elemental analysis using an inductively coupled plasma atomic emission spectrometer (ICP-AES), and the extraction rates of various kinds of metals from the aqueous phase to the organic phase were determined. The relation between the pH and the extraction rates of various kinds of metals are presented in the following Table 3 and Fig. 1.

**[Table 3]**

| Example 1 (pH) | Extraction rate(Unit: %) | | | |
|---|---|---|---|---|
| | SC³⁺ | Fe³⁺ | Zr⁴⁺ | Th⁴⁺ |
| 0.3 | 68 | 0 | 99 | - |
| 1.1 | 68 | 0 | 43 | - |
| 1.3 | 67 | 0 | 21 | - |
| 1.4 | 69 | 0 | 22 | - |
| 1.6 | 69 | 0 | 9.4 | - |

### [Comparative Example 1]

In Comparative Example 1, the extraction rates of various kinds of metals from the aqueous phase to the organic phase were determined by the same method as in Example 1 except that the sulfuric acid solution was divided into five portions by 2.5 ml for each, the pH of the sulfuric acid solution was adjusted to a constant value in the range of 0.0 to 2.5, and the neutral extractant (TOPO) was used as an extractant for scandium extraction. The relation between the pH and the extraction rates of various kinds of metals are presented in the following Table 4 and Fig. 1.

**[Table 4]**

| Comparative Example 1 (pH) | Extraction rate(Unit: %) | | | |
|---|---|---|---|---|
| | Sc³⁺ | Fe³⁺ | Zr⁴⁺ | Th⁴⁺ |
| 0.3 | 46 | 0 | 96 | - |
| 1.4 | 41 | 0 | 24 | - |
| 1.7 | 38 | 0 | 2.5 | - |
| 2.1 | 35 | 0 | 0 | - |
| 2.5 | Turbid | Turbid | Turbid | - |

### [Comparative Example 2]

In Comparative Example 2, the extraction rates of various kinds of metals from the aqueous phase to the organic phase were determined by the same method as in Example 1 except that the sulfuric acid solution was divided into three portions by 2.5 ml for each, the pH of the sulfuric acid solution was adjusted to a constant value in the range of 0.0 to 1.0, and the phosphoric acid-based extractant (PC88A) was used as an extractant for scandium extraction. The relation between the pH and the extraction rates of various kinds of metals are presented in the following Table 5 and Fig. 1.

**[Table 5]**

| Comparative Example 2 (pH) | Extraction rate(Unit: %) | | | |
|---|---|---|---|---|
| | Sc³⁺ | Fe³⁺ | Zr⁴⁺ | Th⁴⁺ |
| 0.0 | 100 | 75 | - | 72 |
| 0.5 | 100 | 96 | - | 93 |
| 1.0 | 100 | 99 | - | 100 |

As can be seen from the results for Example 1, it is possible to extract only scandium at a high yield by subjecting the acidic solution of a target for treatment to solvent extraction in a state in which the pH of the acidic solution is adjusted to a range of between 0.0 or more and 2.0 or less, preferably a range of between 1.7 or more and 2.0 or less and maintained in this range in the case of using a mixed extractant of a phosphoric acid-based extractant and a neutral extractant as an extractant for scandium extraction.

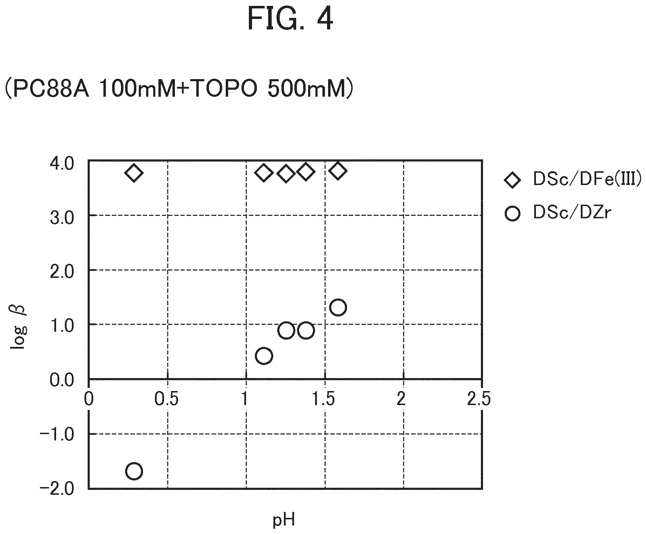

Moreover, the characteristic feature is that scandium is uniformly extracted at an extraction rate of 60% or more regardless of the pH of the acidic solution when a mixed extractant is used as in Example 1. Meanwhile, iron contained in the acidic solution is not extracted at any pH and zirconium is hardly extracted at a pH of, for example, 1.7 or more. Here, the separation factors of scandium to Fe³⁺ and Zr⁴⁺ which are impurity elements when a mixed extractant is used in Example 1 are illustrated in Fig. 4.

As described above, the generation of hydroxides of iron is likely to be promoted in an acidic solution containing a large amount of iron ions when the pH of the acidic solution exceeds 2.5 to 3.0. As presented in the results for Example 1, by adjusting the pH of an acidic solution to 0.0 or more and 2.0 or less prior to the solvent extraction treatment, it is possible to suppress the generation of hydroxides of iron, and moreover, it is possible to extract scandium at a sufficiently high extraction rate even from an acidic solution having a pH in a low region in which such hydroxides of iron are not generated by use of a mixed extractant of a phosphoric acid-based extractant and a neutral extractant.

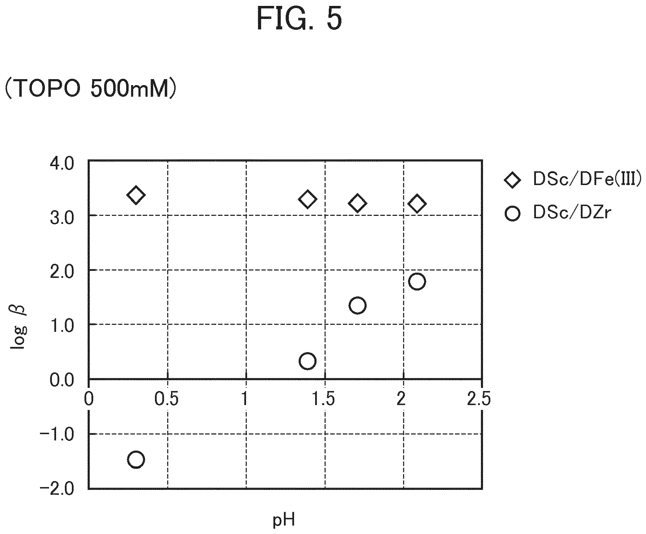

On the other hand, as in Comparative Example 1, when an extractant composed only of a neutral extractant is used, there is no case in which the extraction rate of scandium exceeds 50% and the separation factors to the impurity elements are small regardless of the pH value of the acidic solution. Incidentally, the separation factors of scandium to Fe³⁺ and Zr⁴⁺ which are impurity elements when an extractant composed only of a neutral extractant is used in Comparative Example 1 are illustrated in Fig. 5.

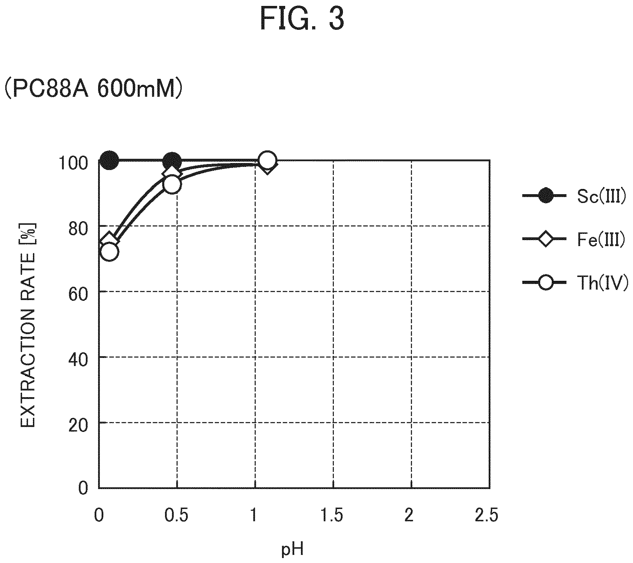

In addition, as can be seen from the results for Comparative Example 2 illustrated in Fig. 3, it is impossible to effectively separate scandium from the impurity elements regardless of the pH value of the acidic solution in the case of using an extractant composed only of a phosphoric acid-based extractant.

From the above results, it has been found that it is possible to efficiently separate scandium and impurity elements including iron from each other and to selectively extract only scandium by use of a mixed extractant of a phosphoric acid-based extractant and a neutral extractant as an extractant for scandium extraction. In addition, it has been found that it is possible to extract only scandium at a higher purity by adjusting the pH of an acidic solution to a range of between 0.0 or more and 2.0 or less, more preferably a range of between 1.7 or more and 2.0 or less prior to the solvent extraction and subjecting the acidic solution after pH adjustment to solvent extraction.

### <<3. Extraction of scandium from acidic solution obtained through acid leaching of nickel oxide ore>>

### [Example 2, Example 3]

As Examples 2 and 3, a sulfuric acid solution (the following Table 7) into which scandium was leached by subjecting nickel oxide ore to an acid leaching treatment was subjected to solvent extraction using a mixed extractant (a mixed extractant of a phosphoric acid-based extractant and a neutral extractant) prepared as presented in the following Table 6.

**[Table 6]**

| Extractant | Molar ratio of solvent | Concentration of PC88A[mol/L] | Concentration of TOPO[mol/L] |
|---|---|---|---|
| Example 2 | PC88A: TOPO =29: 71 | 0.2 | 0.5 |
| Example 3 | PC88A: TOPO =10: 90 | 0.1 | 0.9 |

**[Table 7]**

| Sulfuric acid solution | Concentration of metal(Unit: mg/L) | | | | | |
|---|---|---|---|---|---|---|
| | Sc³⁺ | Fe³⁺ | Al³⁺ | Cr³⁺ | Ni²⁺ | Th⁴⁺ |
| Example 2 | 11,000 | 2,800 | 2,800 | 160 | 400 | 15 |
| Example 3 | 11,000 | 2,800 | 2,800 | 160 | 400 | 15 |

Specifically, as the sulfuric acid solution to be a target for the solvent extraction treatment, a sulfuric acid solution (post-sulfuration liquid) obtained by adding a sulfurizing agent to a leachate obtained by subjecting actual nickel oxide ore to pressure sulfuric acid leaching by a known method and separating nickel and cobalt from the leachate by a sulfuration reaction was prepared. Incidentally, as presented in Table 7, this sulfuric acid solution contains impurities such as aluminum (Al), chromium (Cr), thorium (Th), and trivalent iron (Fe) and nickel (Ni) remaining in a trace amount as well as scandium (Sc).

Moreover, in Examples 2 and 3, the sulfuric acid solution was divided into six portions by 30 ml for each and the pH of the sulfuric acid solution was adjusted to a constant value in the range of 1.0 to 2.0. Thereafter, the respective sulfuric acid solutions were mixed with 30 ml of mixed extractant for scandium extraction (PC88A + TOPO), and the mixed solution was stirred at the number of revolutions of 650 rpm for 20 minutes. At this time, a 1 mol/L aqueous solution of sodium hydroxide was appropriately added to the mixed solution in order to maintain the pH of the sulfuric acid solution at the same value as that before mixing with the mixed extractant.

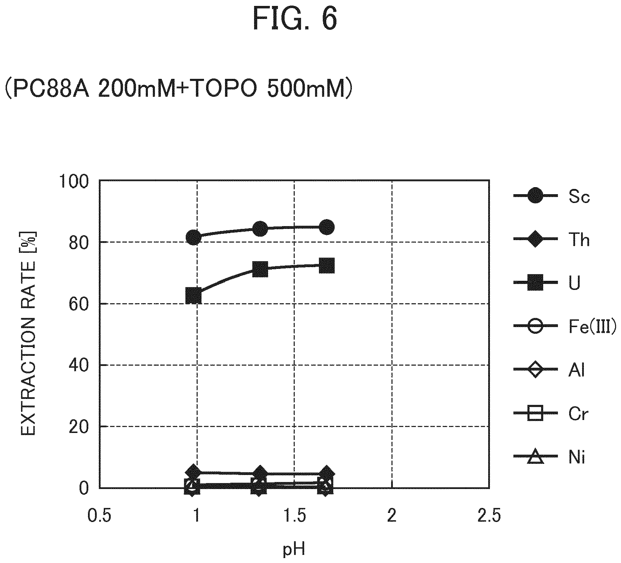

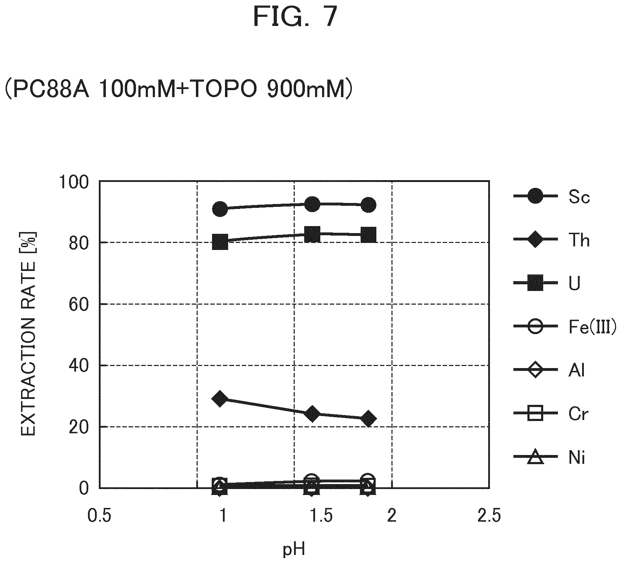

After stirring for a predetermined time, the aqueous phase and organic phase of the mixed solution were separated from each other by using a separatory funnel, the extraction residual liquid (aqueous phase) was subjected to elemental analysis using an inductively coupled plasma atomic emission spectrometer (ICP-AES), and the extraction rates of various kinds of metals from the aqueous phase to the organic phase were determined. The relation between the pH and the extraction rates of various kinds of metals contained in the nickel oxide ore are presented in the following Table 8 and Fig. 6 for Example 2 and the following Table 9 and Fig. 7 for Example 3.

**[Table 8]**

| Example 2 (pH) | Extraction rate(Unit: %) | | | | | |
|---|---|---|---|---|---|---|
| | Sc³⁺ | Fe³⁺ | Al³⁺ | Cr³⁺ | Ni²⁺ | Th⁴⁺ |
| 1.0 | 82 | 0.7 | 0 | 0.6 | 0.3 | 4.9 |
| 1.3 | 85 | 1.5 | 0 | 0.7 | 0.3 | 4.6 |
| 1.7 | 85 | 1.5 | 0 | 0.7 | 0.3 | 4.6 |

**[Table 9]**

| Example 3 (pH) | Extraction rate(Unit: %) | | | | | |
|---|---|---|---|---|---|---|
| | Sc³⁺ | Fe³⁺ | Al³⁺ | Cr³⁺ | Ni²⁺ | Th⁴⁺ |
| 1.1 | 91 | 1.3 | 0 | 0.6 | 0.3 | 29 |
| 1.6 | 93 | 2.6 | 0 | 0.7 | 0.3 | 25 |
| 1.9 | 92 | 2.6 | 0 | 0.7 | 0.3 | 23 |

As presented in the results for Examples 2 and 3, it is possible to separate scandium in an acidic solution containing impurities such as aluminum, iron, and thorium and nickel which are contained in the nickel oxide ore from these impurity elements and thus to extract scandium at a high purity.

### <<4. Mixing proportion in mixed extractant>>

### [Reference Example 1]

As Reference Example 1, solvent extraction was performed using a mixed extractant which contained a phosphoric acid-based extractant (PC88A) and a neutral extractant (TOPO) and in which the mixing proportion of the phosphoric acid-based extractant was set to 1% in terms of molar ratio by mixing TOPO: 500 mM with PC88A: 5 mM as presented in the following Table 10.

**[Table 10]**

| Extractant | Molar ratio of solvent | Concentration of PC8 8A [mol/L] | Concentration of TOPO [mol/L] |
|---|---|---|---|
| Reference Example 1 | PC88A:TOPO =1: 99 | 0.005 | 0.5 |

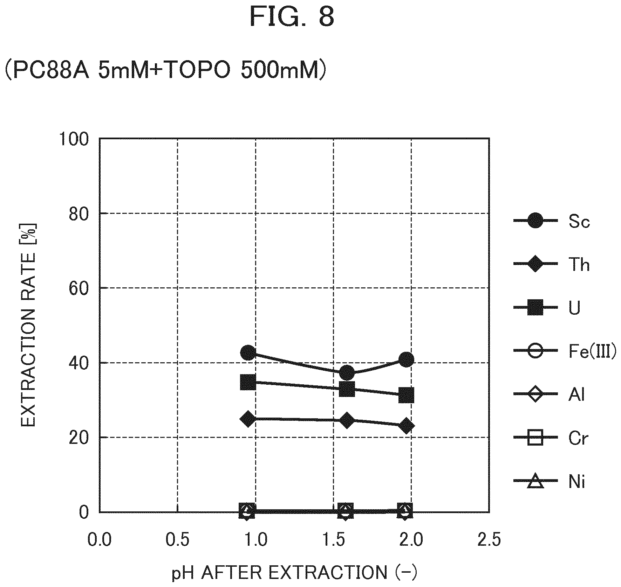

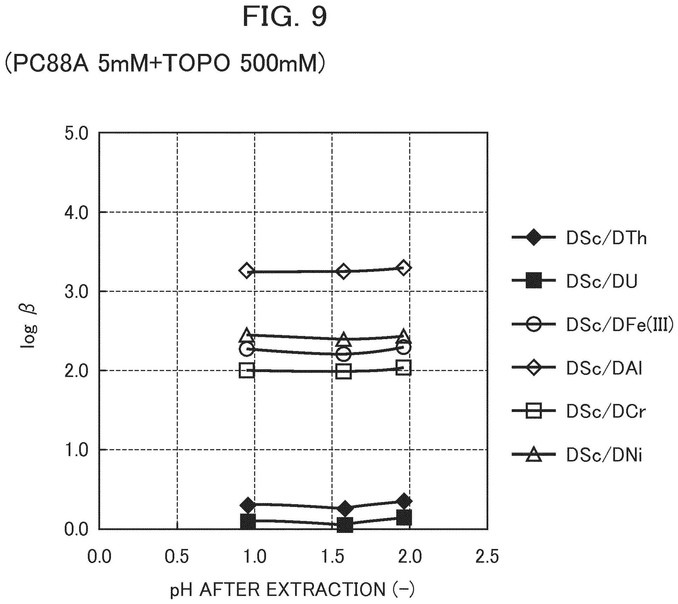

The operation of solvent extraction was performed in the same manner as in Example 2 using the same sulfuric acid solution (Table 7) as that in Example 2 as a target for treatment and adjusting the pH of the sulfuric acid solution to three patterns of 1.0, 1.6, and 1.8, respectively. Thereafter, the aqueous phase and organic phase of the mixed solution were separated from each other by using a separatory funnel, the extraction residual liquid (aqueous phase) was subjected to elemental analysis using an inductively coupled plasma atomic emission spectrometer (ICP-AES), and the extraction rates of various kinds of metals from the aqueous phase to the organic phase were determined. The relation between the pH and the extraction rates of various kinds of metals are presented in the following Table 11 and Figs. 8 and 9.

**[Table 11]**

| Reference Example 1 (pH) | Extraction rate(Unit: %) | | |
|---|---|---|---|
| | SC³⁺ | Fe³⁺ | Th⁴⁺ |
| 1.0 | 47 | 0 | 25 |
| 1.6 | 38 | 0 | 25 |
| 1.8 | 41 | 0 | 23 |

From the results for Reference Example 1, it has been found that it is impossible to sufficiently separate scandium in relation with thorium which is an impurity element and the scandium selectivity in the extraction slightly decreases when the mixing proportion of the phosphoric acid-based extractant in the mixed extractant is 1%.

### <<5. Solvent extraction using mixed extractant containing another phosphoric acid-based extractant>>

### [Example 4]

As Example 4, the following mixed extractant was prepared and solvent extraction was performed. In other words, as presented in the following Table 12, di(2,4,4-trimethylpentyl)phosphinic acid (trade name: Cyanex272) was used as a phosphoric acid-based extractant and a mixed extractant was prepared by dissolving the respective extractants in SWASOL so that the molar concentration of the phosphoric acid-based extractant was 0.1 mol/L and the molar concentration of the neutral extractant (TOPO) was 0.5 mol/L.

**[Table 12]**

| Extractant | Molar ratio of solvent | Concentration of Cyanex 272 [mol/L] | Concentration of TOPO [mol/L] |
|---|---|---|---|
| Example 4 | Cyanex272: TOPO =17: 83 | 0.1 | 0.5 |

A sulfuric acid solution containing scandium (Sc), iron (Fe), and zirconium (Zr) at the concentrations presented in the following Table 13 was prepared as a target for solvent extraction, and the sulfuric acid solution was divided into six portions by 30 ml for each and the pH thereof was adjusted to a constant value in the range of 1.0 to 2.0.

**[Table 13]**

| Sulfuric acid solution | Concentration of metal(Unit: mg/L) | | |
|---|---|---|---|
| | Sc³⁺ | Fe³⁺ | Zr⁴⁺ |
| Example 4 | 13,000 | 2,600 | 100 |

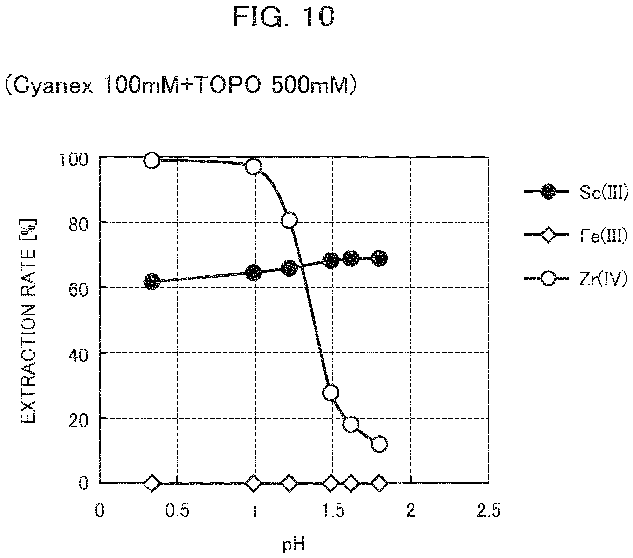

The operation of solvent extraction was performed in the same manner as in Example 1. Thereafter, the aqueous phase and organic phase of the mixed solution were separated from each other by using a separatory funnel, the extraction residual liquid (aqueous phase) was subjected to elemental analysis using an inductively coupled plasma atomic emission spectrometer (ICP-AES), and the extraction rates of various kinds of metals from the aqueous phase to the organic phase were determined. The relation between the pH and the extraction rates of various kinds of metals are presented in the following Table 14 and Fig. 10.

**[Table 14]**

| Example 4(pH) | Extraction rate(Unit: %) | | |
|---|---|---|---|
| | SC³⁺ | Fe³⁺ | Zr⁴⁺ |
| 0.3 | 62 | 0 | 99 |
| 1.0 | 65 | 0 | 97 |
| 1.2 | 66 | 0 | 81 |
| 1.5 | 68 | 0 | 28 |
| 1.6 | 69 | 0 | 18 |
| 1.8 | 69 | 0 | 12 |

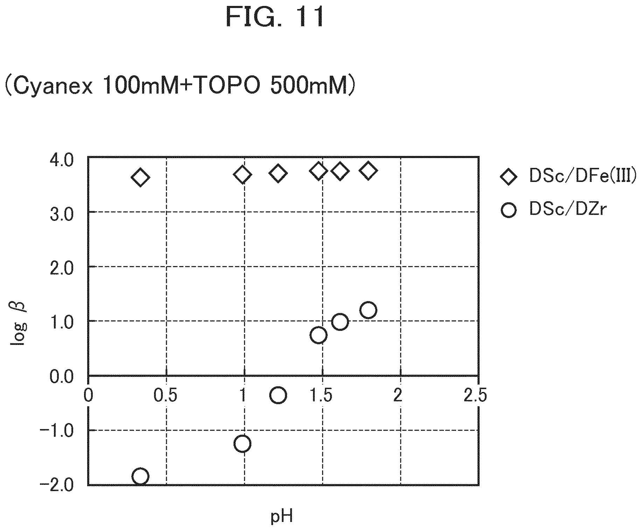

From the results for Example 4, it is possible to efficiently separate scandium and impurity elements from each other and thus to purify scandium at a high purity even in the case of using a mixed extractant containing a phosphoric acid-based extractant different from that used in Example 1. Incidentally, the separation factors of scandium to Fe³⁺ and Zr⁴⁺ which are impurity elements are illustrated in Fig. 11.

## Claims

1. A method for purifying scandium, comprising:
subjecting an acidic solution containing an element component including at least iron as well as scandium to solvent extraction using a mixed extractant containing a phosphoric acid-based extractant and a neutral extractant to extract scandium from the acidic solution.

2. The method for purifying scandium according to claim 1, wherein the phosphoric acid-based extractant is 2-ethylhexylphosphonic acid 1-ethylhexyl.

3. The method for purifying scandium according to claim 1 or 2, wherein the neutral extractant is tri-n-octylphosphine oxide.

4. The method for purifying scandium according to any one of claims 1 to 3, wherein the phosphoric acid-based extractant is contained in the mixed extractant at a mixing proportion in a range of between 5% or more and 50% or less in terms of molar ratio.

5. The method for purifying scandium according to any one of claims 1 to 4, wherein a pH of the acidic solution is adjusted to a range of between 0.0 or more and 2.0 or less and the acidic solution after pH adjustment is subjected to the solvent extraction.

6. The method for purifying scandium according to any one of claims 1 to 4, wherein the acidic solution is
a solution obtained by adding an acid to nickel oxide ore and leaching scandium or a solution obtained by dissolving scandium oxide or scandium hydroxide in an acid, and
a pH of the acidic solution is adjusted to a range of between 0.0 or more and 2.0 or less and the acidic solution after pH adjustment is subjected to the solvent extraction.

7. The method for purifying scandium according to any one of claims 1 to 6, wherein the acidic solution further contains any one or more kinds of zirconium or thorium.

8. A scandium extractant for extracting scandium from an acidic solution containing an element component including at least iron as well as scandium, comprising:
a phosphoric acid-based extractant and a neutral extractant.

9. The scandium extractant according to claim 8, wherein the phosphoric acid-based extractant is contained at a proportion in a range of between 5% or more and 50% or less in terms of molar ratio.
